# EUROPEAN PATENT SPECIFICATION

(11) **EP 2 473 073 B1**
(45) Date of publication and mention of the grant of the patent: **18.12.2013**
(21) Application number: 10745403.5
(22) Date of filing: 27.07.2010
(51) Int. Cl.: A41D 27/24, B29C 65/10

(54) **A DEVICE FOR WELDING FABRICS**
VORRICHTUNG ZUM SCHWEISSEN VON GEWEBE
DISPOSITIF DE SOUDAGE DE TISSUS

(30) Priority: 31.08.2009 IT MI20091514
(43) Date of publication of application: 11.07.2012
(73) Proprietor: Fra-Ser S.p.A., 20129 Milano (IT)
(72) Inventor: SALOTTO, Luciano, I-20149 Milano (IT)
(74) Representative: Tansini, Elio Fabrizio
(86) International application number: PCT/IB2010/053399
(87) International publication number: WO 2011/024089

(56) References cited:
- EP-A1- 1 508 428
- EP-A2- 0 381 127
- WO-A1-01/81082
- WO-A1-2007/025744
- US-A- 4 957 571
- US-A1- 2005 279 446

## Description

The present invention relates to a device for welding fabrics, of the type disclosed in WO 2007/025744, EP 0381127, or WO 01/81082, for example.

In particular, the present invention relates to a heat-sealing device, used for steadily coupling two or more ribbons or tapes on at least one respective fabric or for welding two superposed layers of fabric by means of two or more ribbons. Generally, these ribbons are associated with garments for creating particular graphic patterns or waterproofing one or more regions of the garment. In case of welding of two layers of fabric, the ribbons or tapes are used for determining a steady coupling between said fabrics disposed mutually in side by side relationship and/or superposed.

It is known that welding devices for fabrics consist of a supporting frame defining a work bench. Extending from the bench is a support post having a substantially L-shaped conformation.

The support post carries the different components of a heating member adapted to dispense a flow of hot air onto a fabric region to be welded.

The post further supports a roller for tape application, generally idle, a series of transmission and guide elements placed upstream of the application roller and a reel for feeding the tape.

A roller or other counter-member, generally motor-driven, is tangential to the application roller for retaining the tape and the respective fabric.

During feeding of the tape, the heating member addresses the hot air flow onto the tape and the fabric that are inserted between the application roller and counter roller, enabling hot welding of the tape on the fabric.

While these welding devices are able to carry out welding of the tape on the fabric in a simple manner, they however have important drawbacks, because they do not enable simultaneous application of two or more ribbons or tapes disposed parallel to each other in side by side relationship.

In this regard, the Applicant has noticed that during simultaneous application, the tapes can be submitted to different feeding speeds both in case of rectilinear forward movement, due to geometric and feeding irregularities of the fabric, and in case of curvilinear forward movement, due to the different lengths of the tapes that are applied according to different radii of curvature on the same circular sector.

The Applicant has further noticed that in case of application of two or more parallel tapes, the usual counter-roller is not able to ensure a homogeneous dragging along over the whole width of the fabric sector concerned with the application. This width in fact appears to be much wider than in the traditional application conditions.

Under this situation, the technical task underlying the present invention is to conceive a welding device for fabrics capable of substantially obviating the mentioned drawbacks.

A further aim of the present invention is to conceive a welding device for fabrics enabling two or more tapes disposed substantially parallel to each other to be simultaneously handled. A still further aim of the present invention is to conceive a welding device for fabrics allowing application of the tapes to be controlled on a rather wide fabric sector.

The technical task mentioned and the aims specified are substantially achieved by a welding device for fabrics that is characterised in that it comprises the technical solution hereinafter claimed.

The description of a preferred but not exclusive embodiment of a welding device for fabrics according to the invention is set out hereinafter by way of nonlimiting example and illustrated in the accompanying drawings, in which:
- Fig. 1 is a perspective view of a welding machine made in accordance with the present invention;

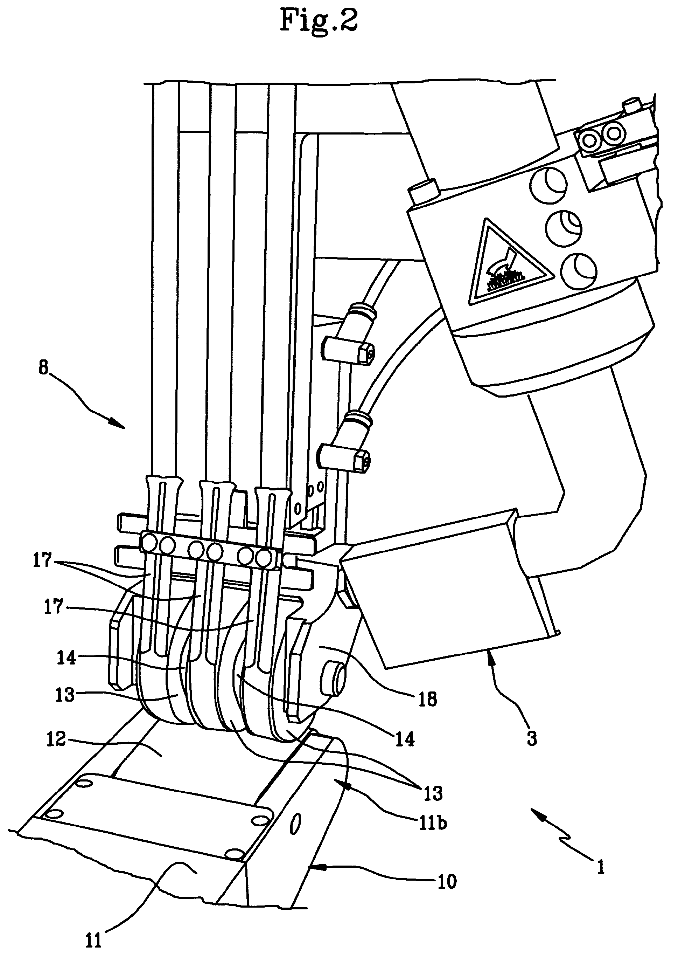

- Fig. 2 shows an enlarged detail of the machine according to the invention.

With reference to the figures, the welding device for fabrics according to the invention is generally identified by reference numeral 1.

In particular, device 1 being the object of the present invention is advantageously used for carrying out welding operations or particular works with added tape, especially on garments of various kind. In particular, the welding device 1 is used for joining two or more tapes or ribbons to a respective fabric so as to create particular graphic patterns or for waterproofing predetermined regions of the garment. In addition, this device 1 can be used for steadily joining two textile articles of manufacture or fabric layers, using said tapes as an attachment interface between the layers.

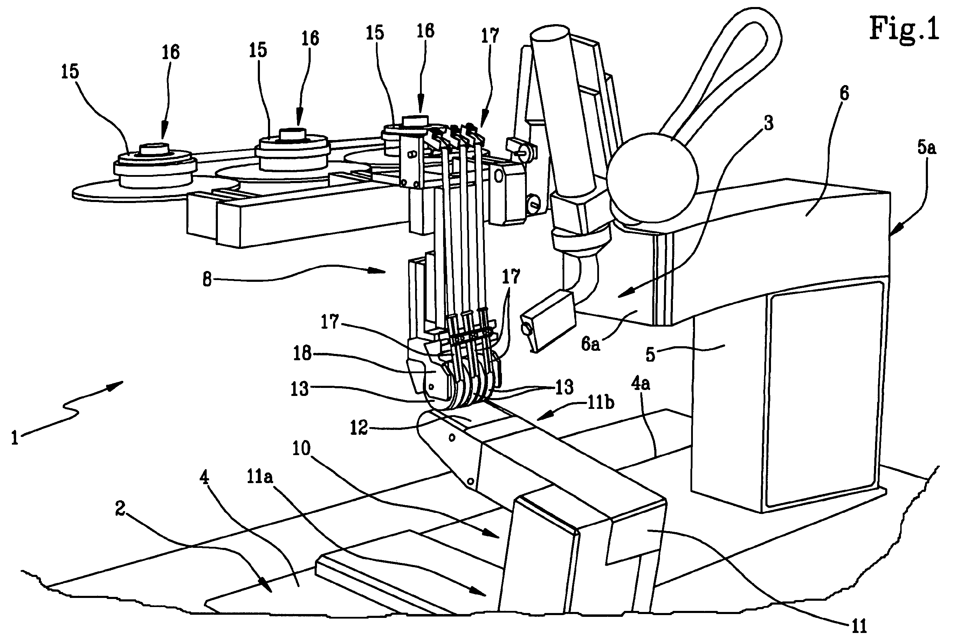

As better shown in Fig. 1, device 1 comprises a supporting frame 2 adapted to carry a heating unit 3, of the type delivering hot air for example, herein not further described.

In particular, frame 2 is equipped with a rest base 4 having a substantially flat conformation and horizontal extension.

Standing from an upper surface 4a of the base is a post 5, to an upper end 5a of which is secured a crosspiece 6 having a substantially horizontal longitudinal extension, i.e. an extension parallel to the horizontal extension of base 4.

It is also to be pointed out that post 5 is housed at an end region of the upper surface 4a of base 4. Under this situation, the crosspiece 6 extends over the base 4 in order to define a substantially C-shaped conformation of the whole frame 2.

Extending from base 4 is an abutment element 10 placed under a distal end 6a of the crosspiece 6, opposite to post 5.

In the embodiment shown, the abutment element 10 has a bar 11 having a first end 11a adapted to be coupled to the upper surface 4a of base 4 and a second end 11b, opposite to the first one and adapted to bear a counter-track 12 slidably mounted on bar 11 between horizontal rotation axes or axes parallel to the work bench and carrying respective pulleys. Advantageously said counter-track is motor-driven so that at least one of said axes constitutes a driving shaft. Advantageously, bar 11 is adapted to carry accessories (not further described, as of known type) such as rest surfaces and alignment guides for facilitating the operator's work, for example.

Engagement of means 8 for feeding at least two tapes is provided, close to the distal end 6a of the crosspiece 6.

The feeding means 8 advantageously has an application roller 13 for each tape. Preferably, the application rollers are mounted idly on a respective single axis. Advantageously, at least one spacer 14 is inserted between two application rollers disposed in coaxial side by side relationship. In the embodiment shown in the figures, three tapes are provided, each associated with a respective application roller.

The feeding means 8 further has at least one reel 15 for each tape. Reel 15 is rotatably supported relative to the crosspiece 6 upstream of the related application roller 13 and has respective tensioning means 16, such as a friction means, adapted to keep the tape moving towards the application roller 13 taut.

A series of transmission rollers 17 and/or guide elements can be operatively interposed between the application roller 13 and reel 15, which rollers or elements define a predetermined path of travel for each tape unwound from the application roller 13 for correct feeding of same.

Preferably, the application rollers 13 are supported by a supporting portion 18 having a substantially fork-shaped conformation.

Advantageously, the application rollers 13 are disposed in such a manner that they are brought into thrust relationship against a single counter-track. The counter-track extends perpendicular to the feeding direction of the tape according to a width capable of enabling it to come simultaneously in thrust relationship against all application rollers 13, after interposition of the tapes and the article of manufacture between said application rollers and counter-track.

When the application rollers are brought into thrust relationship against the counter-track 12, each application roller 13 is substantially tangential to the counter-track 12 itself. Through coupling between the application rollers and counter-track, the tapes and the fabric are retained and caused to move forward by effect of the dragging action determined by the counter-track, while the heating unit delivers a controlled flow of hot air to the application rollers, to produce thermoplasticization of the tapes in the entry region between the application rollers and the counter-track 12. Passage between the application rollers 13 and the counter-track 12 causes a steady union by heat sealing of the tapes on the fabric.

Thus the simultaneous application of two or more tapes is achieved, which tapes when working has been completed appear to be applied onto the article of manufacture according to perfectly parallel paths. Thus it is possible to carry out particular workings in a simple and quick manner, such as simultaneous waterproofing of seams parallel to each other, treatment of zips and/or application of ornamental patterns on the articles of manufacture, in a more precise and less time-consuming manner as compared with the same operations carried out with traditional machines executing application of a single tape.

The simultaneous application of more than one tape, above all when relatively large portions of fabric are concerned, can impose more or less important and/or sudden variations in the application speed of each tape relative to the other or others, due for example to irregularities that can occur in dragging the fabric along and/or during application according to curvilinear trajectories.

Advantageously, the presence of several application rollers mutually idle, each dedicated to a single tape to be applied, allows these speed variations to be followed and therefore a perfect and homogeneous application of each tape to be determined, i.e. without creases and/or excessive stretching actions. Still more advantageously, the presence of several application rollers mutually idle associated in thrust relationship with a single counter-track allows the article of manufacture and the tapes to move forward in a uniform manner over the whole width of the article of manufacture itself concerned with the application.

A person skilled in the art, in applying the present invention, will be able to carry out modifications or variations to the above description and illustration without departing from the scope of the appended claims.

For instance, the counter-track can consist of a belt element mounted on axes at least one of which is motor-driven.

According to a further example, the term "fabric" has been used for indicating any type of article of manufacture adapted to be decorated/joined by means of tapes or ribbons through heat sealing and therefore it may consist of a true fabric or other "nonwoven" article of manufacture.

## Claims

1. A welding device for fabrics comprising means (8) for feeding at least two ribbons or tapes to be welded to at least one respective fabric and a heating unit (3) adapted to operate on a region of the fabric to be welded, wherein said feeding means (8) comprises an application roller (13) for each tape or ribbon,
**characterized in that**
said application rollers (13) are coaxially disposed in side by side relationship with each other.

2. A device as claimed in one or more of the preceding claims, wherein said application rollers (13) are idly mounted on a single axis.

3. A device as claimed in one or more of the preceding claims, wherein at least one spacer (14) is mounted between two adjacent application rollers.

4. A device as claimed on one or more of the preceding claims, wherein the application rollers (13) are carried by a supporting portion (18) having a substantially fork-shaped conformation.

5. A device as claimed in one or more of the preceding claims, further comprising at least one counter-track (12) associable with said application rollers (13).

6. A device as claimed in the preceding claim, wherein said counter-track is motor-driven.

7. A device as claimed in claim 5 or 6, wherein said application rollers (13) are such disposed as to cooperate in thrust relationship against a single counter-track (12).

8. A device as claimed in one or more of claims 5 to 7, wherein said counter-track (12) extends perpendicular to a feeding direction of the tape so that it can cooperate in thrust relationship against all the application rollers (13)

## Patentansprüche

1. Schweißvorrichtung für Gewebe, umfassend ein Mittel (8) zum Fördern von mindestens zwei Streifen oder Bändern, die an mindestens einem entsprechenden Gewebe anzuschweißen sind, und eine Erhitzungseinheit (3), die dazu geeignet ist, auf einem Bereich des zu schweißenden Gewebes zu agieren, wobei das Fördermittel (8) eine Walze (13) zum Aufbringen eines jeden Bands oder Streifens umfasst,
**dadurch gekennzeichnet, dass**
die Aufbringungswalzen (13) koaxial in einer Seite-an-Seite-Beziehung zueinander angeordnet sind.

2. Vorrichtung nach einem oder mehreren der vorangehenden Ansprüche, wobei die Aufbringungswalzen (13) auf einer einzigen Achse in Ruhestellung montiert sind.

3. Vorrichtung nach einem oder mehreren der vorangehenden Ansprüche, wobei zwischen zwei benachbarten Aufbringungswalzen mindestens ein Abstandhalter (14) montiert ist.

4. Vorrichtung nach einem oder mehreren der vorangehenden Ansprüche, wobei die Aufbringungswalzen (13) von einem Halterungsabschnitt (18) getragen werden, aufweisend eine im Wesentlichen gabelförmige Gestalt.

5. Vorrichtung nach einem oder mehreren der vorangehenden Ansprüche, ferner umfassend mindestens eine Gegenlaufbahn (12), die an die Aufbringungswalzen (13) anschließbar ist.

6. Vorrichtung nach dem vorangehenden Anspruch, wobei die Gegenlaufbahn motorbetrieben ist.

7. Vorrichtung nach Anspruch 5 oder 6, wobei die Aufbringungswalzen (13) so angeordnet sind, dass sie in einer Schubbeziehung gegen eine einzige Gegenlaufbahn (12) zusammenwirken.

8. Vorrichtung nach einem oder mehreren der Ansprüche 5 bis 7, wobei sich die Gegenlaufbahn (12) lotrecht zu einer Förderrichtung des Bands erstreckt, sodass sie in einer Schubbeziehung gegen alle Aufbringungswalzen (13) zusammenwirken kann.

## Revendications

1. Dispositif de soudage de tissus comprenant un moyen (8) servant à alimenter au moins deux rubans ou bandes à souder à au moins un tissu correspondant et une unité de chauffage (3) adaptée pour agir sur une partie du tissu à souder, dans lequel le moyen d'alimentation (8) comprend un rouleau d'application (13) pour chaque bande ou ruban,
**caractérisé en ce que**
lesdits rouleaux d'application (13) sont disposés chacun côte à côte de façon coaxiale.

2. Dispositif selon l'une ou plusieurs des revendications précédentes, dans lequel lesdits rouleaux d'application (13) sont montés de façon inactive sur un seul axe.

3. Dispositif selon l'une ou plusieurs des revendications précédentes, dans lequel au moins une entretoise (14) est montée entre deux rouleaux d'application adjacents.

4. Dispositif selon l'une ou plusieurs des revendications précédentes, dans lequel lesdits rouleaux d'application (13) sont supportés par une partie de support (18) ayant substantiellement la forme d'une fourchette.

5. Dispositif selon l'une ou plusieurs des revendications précédentes, comprenant de plus au moins une contre-piste (12) pouvant être associée auxdits rouleaux d'application (13).

6. Dispositif selon la revendication précédente, dans lequel ladite contre-piste est motorisée.

7. Dispositif selon les revendications 5 ou 6, dans lequel lesdits rouleaux d'application (13) sont disposés de telle manière à coopérer par poussée contre une seule contre-piste (12).

8. Dispositif selon l'une ou plusieurs des revendications de 5 à 7, dans lequel ladite contre-piste (12) se développe de façon perpendiculaire par rapport à une direction d'alimentation de la bande de manière à ce qu'elle puisse coopérer par poussée contre tous les rouleaux d'application (13).
